# EUROPEAN PATENT APPLICATION

(11) **EP 1 758 332 A1**
(43) Date of publication of application: **28.02.2007**
(21) Application number: 05018334.2
(22) Date of filing: 24.08.2005
(51) Int. Cl.: H04L 29/06

(54) **Centrally hosted monitoring system**

(71) Applicant: Whan, Wen Jea, La Puente 91744 (US)
(72) Inventor: Whan, Wen Jea, La Puente 91744 (US)
(74) Representative: Meyer, Ludgerus

(57) **Abstract**

A centrally hosted monitoring system built in the Internet and every unit in the system connected with each other for gathering and transferring data, the system comprising: a master/slave server configuration including a master server and plural slave servers, wherein the master server manages the slave servers; plural central sites; and plural monitoring sites; wherein each monitoring site transferring basic information to a pre-assigned slave server and other slave servers will be mirrored in case the pre-assigned slave server fails, and every slave server is backup with each other. Thus, the centrally hosted monitoring system could reduce the data traffic and be applicable to centrally hosted systems with Global Internet mechanism.

## Description

### BACKGROUND OF THE INVENTION

### 1. Field of the Invention

The present invention is related to a centrally hosted monitoring system, and particularly to a centrally hosted monitoring system for reducing data traffic over Internet and dynamic IP and its sharing. The centrally hosted monitoring system is applicable to centrally hosted systems with Global Internet mechanism.

### 2. Description of the Prior Art

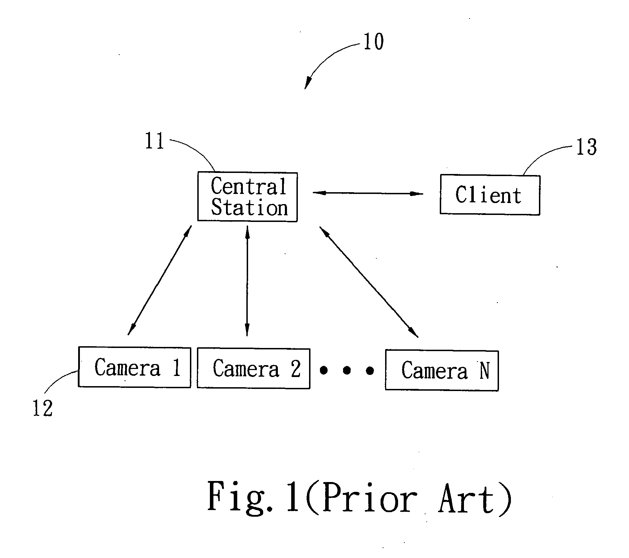

Referring to Fig.1, a conventional centrally hosted camera system 10 includes a central station 11 and a plurality of cameras 12, wherein the image or video data will be transferred to the central station 11 for storing by the camera 12. Once one would like to browse the image data stored previously, the image data has to be downloaded from the central station 11 and sent to a client 13 for browsing. In other words, the image/video data is downloaded or uploaded through the central station 11 for browsing or storing. Once the amount of upload or download becomes greater in a period, the data traffic will become much heavier. The central station 11 would need an enormous Internet bandwidth to meet the data amount to avoid traffic jam.

At present, most of the offices or residents use the Internet popularly and enjoy the convenience. However most use dial-up connection or dynamic Internet Protocol (IP) for their Internet access. In order for the other device to know its current IP address, it would need some kind of routing device.

Thus, the inventor of the present invention provides a centrally hosted monitoring system with global infrastructure for reducing data traffic over Internet and every unit in the system knows each other's status by a pre-assigned mechanism including the routing device for the cameras 12 or IP based devices, which would make the devices to be plugged and played with respect to the routing device.

### SUMMARY OF THE INVENTION

The primary object of the present invention is to provide a centrally hosted monitoring system using dynamic IP address with global infrastructure for storing image information by local storage and for viewing monitoring device directly without going through the central site and hence, reducing the data flow in Internet and avoiding data traffic jam.

The secondary object of the present invention is to provide a centrally hosted monitoring system including slave servers or central sites, which are backup with each other for preventing being unable to access the data so that the dynamic IP and its port number could always be search through any of the slave servers.

The further object of the present invention is to provide a centrally hosted monitoring system including a master server and the mechanism for managing the slave servers so that all the available slave server are updated.

The further object of the present invention is to provide a centrally hosted monitoring system including monitoring sites, which transmit the basic information to a pre-assigned slave server or central site, and backup the information in other slave servers or central sites for the transmission being out of service.

The further object of the present invention is to provide a centrally hosted monitoring system so that one could use the name or other parameters of a device to find its current IP address and port number through any slave server in the system.

The further object of the present invention is to provide a centrally hosted monitoring system including a routing device, so that the cameras or IP based devices could be plugged and played with respect to the routing device.

To achieve the above objects, a centrally hosted monitoring system built in the Internet and every unit in the system connected with each other for gathering and transferring data, the system comprising: a master/slave server configuration including a master server and a plurality of slave servers, wherein the master server manages the slave servers and is backup by mirrors at the same site or remote sites of the master server to insure the function of the master server; a plurality of central sites; a plurality of monitoring sites; and a pre-configured router with a port forwarding and broadcasting between the pre-configured router and IP devices of the monitoring sites.

Each monitoring site records basic information about Internet Protocol (IP) registered by the slave server. Each central site receives every event from the monitoring site. Each monitoring site transfers basic information to a pre-assigned slave server and other slave servers will be mirrored in case the pre-assigned slave server fails. Every slave server is backup with each other. Each monitoring site reports events to a pre-assigned central site and other backup central sites in case the report fails, and every central site is backup with each other. If it needs to add a slave server, any new added salve server will inform other slave servers through the master server. And any user can search any slave server to obtain information of any monitoring site; whereby the data traffic will be reduced when browsing cameras or recorded images.

Each monitoring site further includes IP based device having storing function for storing information to reduce the data traffic of central sites. The IP based device transfers information to a pre-assigned slave server and other slave servers will be mirrored in case the pre-assigned slave server fails. Any user can search any slave server to obtain information of any IP based device. The monitoring site can be an IP based camera. The IP based camera with the same category could be searched by the category from any of the slave server. Thus the monitoring site can be used as an online live business directory.

In order to prevent corruption of the master server, one or several mirrors are created. In order for central station to backup each other, a temporarily backup scheme between central stations is created. In order for dynamic IP to be used and for multiple devices to share one IP for Internet connection, a pre-configured router with a port forwarding is used. In order to find devices connected to the router with pre-configured port, a broadcasting scheme is created to find the device from the router and assign the port forwarding to the devices.

The present invention will be apparent after reading the detailed description of the preferred embodiments thereof in reference to the accompanying drawings.

### BRIEF DESCRIPTION OF THE DRAWINGS

Fig.1 shows a conventional centrally hosted camera system;
Fig.2 is a schematic view of an embodiment according to the present invention for reducing data traffic, which includes the three sub-systems: (1) a master/slave server configuration; (2) a plurality of central sites; and (3) a plurality of monitoring sites using a pre-configured router;
Fig.3 is a schematic view of an embodiment according to the present invention showing the data transferring procedure between the master/slave server configuration and the monitoring sites;
Fig.4 is a schematic view of an embodiment according to the present invention showing the data transferring procedure between the central sites and the monitoring sites.

### DETAILED DESCRIPTION OF THE PREFERRED EMBODIMENT

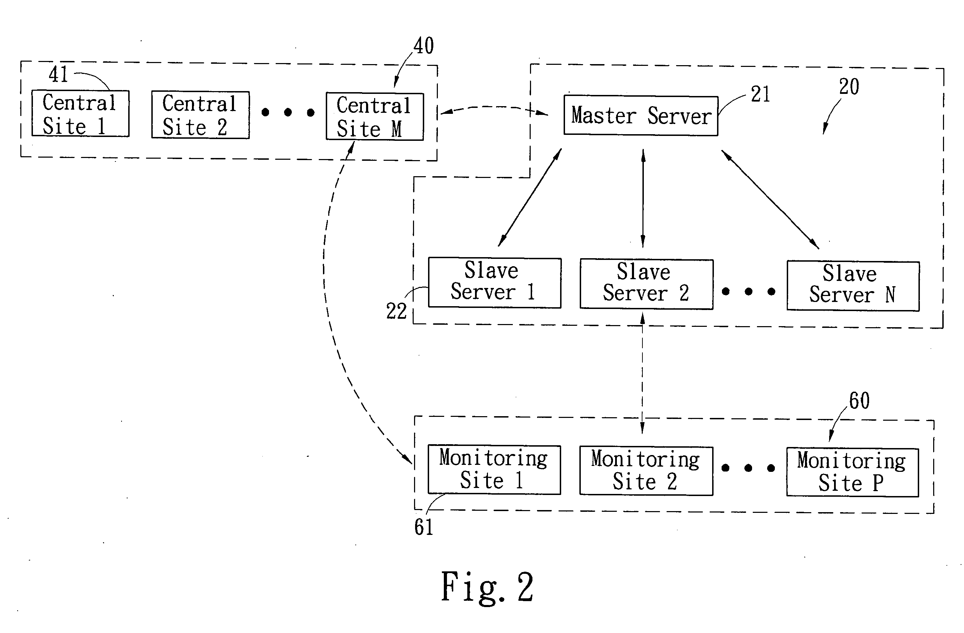

Referring to Fig.2, the centrally hosted monitoring system of the present invention includes three main sub-systems. The first sub-system 20 is a master/slave server configuration comprising a master server 21 and a plurality of slave servers 22 wherein the master server 21 manages the slave servers 22. The master server 21 can be backup by mirrors (not shown) at the same site or remote sites of the master server 21 to insure the function of the master server 21. The second sub-system 40 includes a plurality of central sites 41. The third sub-system 60 includes a plurality of monitoring sites 61 comprising IP based devices (not shown in Fig. 2) having storing function for receiving image information, storing information and providing IP information. The first sub-system 20 further comprises a pre-configured router (not shown) with a port forwarding and broadcasting between the pre-configured router and IP devices of the monitoring sites 61. The IP information could include dynamic IP addresses and port number assigned by the pre-configured router, the category of the monitoring site it belongs to, or owner's name, wherein the current IP address and port number is searched by the basic information from any of the slave servers. Thus, the monitoring site can be regarded as stand-alone Network Attached Storage (NAS).

The centrally hosted monitoring system of the present invention further comprises a pre-configured Dynamic Host Configuration Protocol (DHCP) and a port forwarding on the pre-configured router for sharing IP and using as dynamic IP. The centrally hosted monitoring system of the present invention further comprises a pre-configured gateway router to broadcast and to find the devices attached to the pre-configured gateway router and assign port forwarding automatically. The centrally hosted monitoring system of the present invention further comprises a demilitarized zone (DMZ) for other routers connected to the pre-configured router such that existing LAN with the other routers is intact from the LAN connected to the pre-configured router.

In the first sub-system 20, the master server 21 takes charge of managing and coordinating each slave server 22. Thus any new added slave server 22 would inform other slave servers 22 by the master server 21. The slave server 22 takes charge of the monitoring site 61. Thus the monitoring site 61 will register basic information about IP to a pre-assigned slave server 22 at a pre-scheduled time interval or the status of the monitoring site 61 changing, and then the master server 21 will inform the basic information to other slave servers 22. In case the pre-assigned slave server 22 fails, the information will be mirrored to other slave servers 22. Every slave server 22 is backup with each other. Any one could search any slave server 22 by the basic information to find the monitoring site 61. The monitoring site 61 can be an IP based camera (not shown in figure). The IP based camera with the same category could be searched by the category from any of the slave server 22. Thus the monitoring site 61 can be used as an online live business directory.

The central sites 41 of the second sub-system 40 take charge of managing the events transmitted from the monitoring site 61. In other words, the monitoring site 61 will report every event to a pre-assigned central site 41. In case the transmission fails, the monitoring site 61 will transmit the events to other central sites 41. Each central site 41 backups with each other. The central site 41 can further get the basic information, e.g. current IP address, of the monitoring site 61 through the slave server 22.

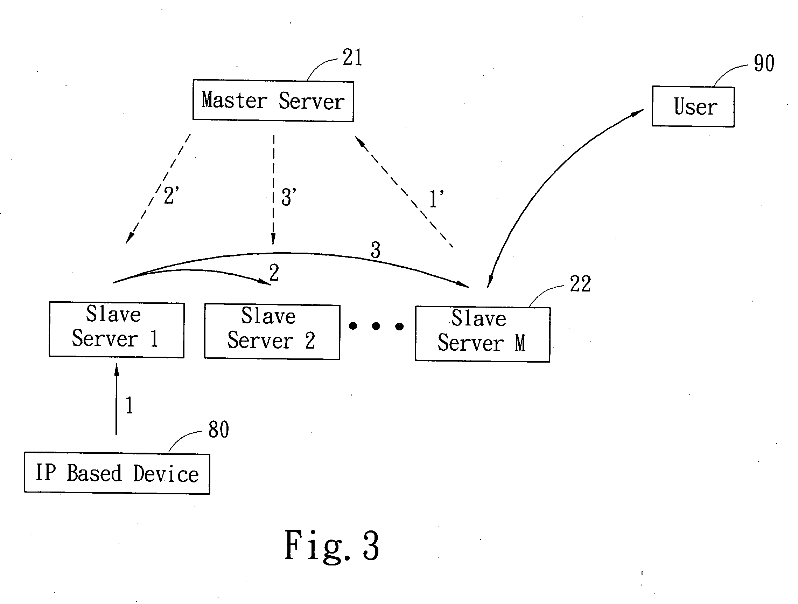

Referring to Fig.3, the diagram shows the procedure between the IP based devices and slave servers of the centrally hosted monitoring system according to the present invention. The IP based device 80 will register its basic information, e.g. device name, current IP address, user's name, etc. to a pre-assigned slave server. The basic information will be backup to other slave servers. The data flow procedures are as the path 1,2 and 3. When a new slave server is added to the system of the present invention, the information of the slave server 22 will be informed to other slave servers 22 through the master server 21. The data flow procedures are as the path 1', 2' and 3'. A customer or a user 90 can search any slave server 22 to find an IP based device 80 and current IP address by its basic information, e.g. device name, owner's name, etc.

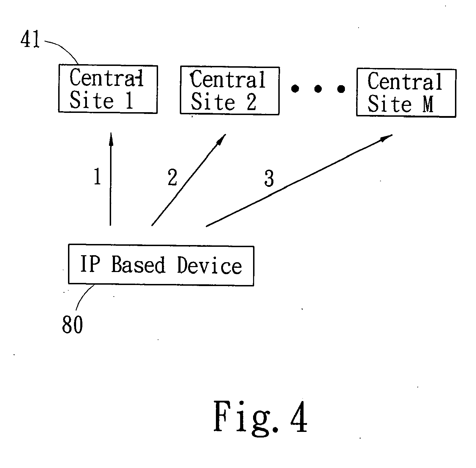

Fig.4 illustrates the procedure between the IP based device and the central site of the centrally hosted monitoring system according to the present invention. The IP based device 80 will report the events to a pre-assigned central site 41. In case the transmission fails, the events will be transmitted to other central site 41 as backup for avoiding information loss. Referring to Fig.4, the path 1 is the first step for the IP based devices 80 to report its events to the pre-assigned central site 41. Once the step is out of order, the IP based device 80 will report its events to other central sites 41 as path 2,3 shown.

Thus, the present invention has following advantages:
1. The central sites or the slave servers of the centrally hosted monitoring system according to the present invention will be backup with each other for avoiding information loss.
2. The image information of the present invention could be stored at local storage device or any storage device in the Internet for avoiding the information stored centrally and reducing the data traffic.
3. Any one could search one of the slave servers to obtain the information of the monitoring site by connecting the centrally hosted system of the present invention with the Internet.
4. Any information of the monitoring site will be stored to a pre-assigned location or backup location for avoiding information loss.

The foregoing description of the preferred embodiments of this invention has been presented for purposes of illustration and description. It is not intended to be exhaustive or to limit the invention to the precise form disclosed, and obviously, many modifications and variations are possible. Such modifications and variations that may be apparent to a person skilled in the art are intended to be included within the scope of this invention as defined by the accompanying claims.

## Claims

1. A centrally hosted monitoring system built in the Internet and every unit in said system connected with each other for gathering and transferring data, said system comprising:
a master/slave server configuration including a master server and a plurality of slave servers, wherein said master server manages said slave servers and is backup by mirrors at the same site or remote sites of said master server to insure the function of said master server;
a plurality of central sites;
a plurality of monitoring sites; and
a pre-configured router with a port forwarding and broadcasting between said pre-configured router and IP devices of the monitoring sites;
wherein each monitoring site recording basic information about Internet Protocol(IP) registered by said slave server; each central site receiving events from said monitoring site; each monitoring site transferring basic information to a pre-assigned slave server and other slave servers will be mirrored in case the pre-assigned slave server fails, and every slave server being backup with each other; each monitoring site reporting events to a pre-assigned central site and other backup central sites in case the transmission fails, and every central site being backup with each other; any user searching any slave server to obtain every information of any monitoring site; whereby the data traffic will be reduced when browsing cameras or recorded images.

2. The centrally hosted monitoring system according to claim 1, wherein the basic information transferred by each monitoring sites includes the device name, current IP address and port number assigned by said pre-configured router, the category of said monitoring site it belongs to, or owner's name, wherein said current IP address and port number is searched by said basic information from any of said slave servers.

3. The centrally hosted monitoring system according to claim 1, wherein the basic information transferred by each monitoring sites includes the device name, current IP address and port number assigned by said pre-configured router, the category of said monitoring site it belongs to, and owner's name.

4. The centrally hosted monitoring system according to claim 1, wherein each monitoring site further includes an IP based device having storing function for storing information to reduce the data traffic of central sites.

5. The centrally hosted monitoring system according to claim 4, wherein the IP based device transfers information to a pre-assigned slave server.

6. The centrally hosted monitoring system according to claim 4, wherein any user searches any slave server to obtain information of any IP based device.

7. The centrally hosted monitoring system according to claim 1, wherein any new added salve server will inform other slave servers through said master server.

8. The centrally hosted monitoring system according to claim 1, wherein said monitoring site can be IP based cameras or IP based devices.

9. The centrally hosted monitoring system according to claim 8, wherein said IP based camera with the same category could be searched by said category from any of the slave server and thus be used as an online live business directory.

10. The centrally hosted monitoring system according to claim 8, wherein the centrally hosted monitoring system further comprises a pre-configured Dynamic Host Configuration Protocol (DHCP) and a port forwarding on said pre-configured router for sharing IP and using as dynamic IP.

11. The centrally hosted monitoring system according to claim 8, , wherein the centrally hosted monitoring system further comprises a pre-configured gateway router to broadcast and to find the devices attached to the pre-configured gateway router and assign port forwarding automatically.

12. The centrally hosted monitoring system according to claim 1, wherein the centrally hosted monitoring system further comprises a demilitarized zone (DMZ) for other routers connected to said pre-configured router such that existing LAN with the other routers is intact from the LAN connected to said pre-configured router.
